# DEMANDE DE BREVET EUROPEEN

(11) **EP 2 722 537 A1**
(43) Date de publication de la demande: **23.04.2014**
(21) Numéro de dépôt: 13306424.6
(22) Date de dépôt: 17.10.2013
(51) Int. Cl.: F16C 7/02, F16C 11/04

(54) **Procédé de réalisation d'un embout goupill d'une pièce longitudinale, embout ainsi obtenu**

(30) Priorité: 18.10.2012 FR 1259921
(71) Demandeur: Epsilon Composite, 33340 Gaillan en Medoc (FR)
(72) Inventeur: Carrere, Noël, 33611 Cestas Cedex (FR); Nogues, Dominique, 33990 Hourtin (FR)
(74) Mandataire: Fantin, Laurent

(57) **Abrégé**

L'objet de l'invention est un procédé de réalisation d'un embout rapporté sur un corps sous forme d'une pièce longitudinale telle qu'un tube, ledit embout comprenant une chape avec deux ailes (18-1, 18-2) munies chacune d'un alésage (20-1, 20-2) destiné à coopérer avec une goupille, caractérisé en ce que l'on réalise au moins une zone (34) de moindre rigidité dans ledit embout, dans la zone située en amont desdits alésages.

## Description

La présente invention concerne un procédé de réalisation d'un embout goupillé d'une pièce longitudinale telle qu'un tube, plus particulièrement d'une bielle dans une structure d'un ouvrage statique ou mobile, d'une charpente, d'un aéronef ou d'un navire.

L'invention couvre aussi l'embout ainsi obtenu.

Dans toute structure, des éléments unitaires tirant et/ou poussant, tels que des bielles ou des tendeurs, sont conçus pour reprendre des efforts importants avec un maximum de sécurité et un minimum de poids.

Par exemple, dans l'aéronautique et plus particulièrement dans la construction d'aéronefs, la liaison entre les ailes et le fuselage est une zone dans laquelle la reprise des efforts est particulièrement complexe.

A cet effet, il est prévu un maillage de tirants, dits aussi bielles, qui sont soumis à des efforts de compression, de traction, voire de flambage, ceci de façon alternée et avec des cycles extrêmement nombreux.

Ces bielles sont liées aux autres éléments de la structure par des liaisons à goupille.

On comprend dès lors que la liaison à goupille est soumise à ces mêmes cycles. Dans l'aéronautique, la chasse au poids est réellement une constante car le poids engendre une surconsommation de combustible ou une perte de charge utile pour une même consommation, ce qui est pénalisant dans tous les cas. De plus, les avionneurs cherchent aussi à améliorer les performances relatives à la résistance mécanique pour un même poids voire un poids réduit.

Aussi, les bielles sont réalisées en matériaux résistants et légers tels des alliages métalliques ou des matériaux composites, et plus particulièrement à partir de fibres de carbone.

De plus, en utilisant une résine adaptée, en recourant au procédé de fabrication par pultrusion, en ajustant les orientations des fibres et avec un savoir-faire de fabrication élaboré, le corps des bielles réalisées présente des caractéristiques mécaniques extrêmement élevées avec un poids extrêmement réduit.

La fabrication de la "partie tubulaire" d'une bielle est industrialisée et le produit obtenu est adapté aux conditions aéronautiques.

Au niveau de la liaison de ces produits tubulaires avec la structure, il est retenu la présence d'une chape ménagée dans l'embout monté aux extrémités de ladite partie tubulaire.

Lorsque l'embout est rapporté sur le corps de bielle, il est généralement réalisé à partir d'un alliage métallique léger tel que de l'aluminium, par moulage et/ou usinage. La chape est venue de fabrication avec le corps de l'embout, lui-même destiné à être emboîté et lié au corps de bielle. La liaison est préférentiellement du type collage, mais peut aussi être obtenue par vissage, rivetage, soudage, goupillage, ou boulonnage.

L'embout qui est monté avec une goupille sur la structure est soumis à des concentrations de contraintes sur des zones très limitées des portées autour de l'axe et les alternances des efforts de traction et de compression conduisent à une fatigue prématurée.

Du fait que la goupille est soumise à une flexion comme il sera indiqué plus avant dans la description, les extrémités de la goupille portent sur des zones très localisées des alésages ménagés dans la chape, induisant une répartition des contraintes non homogène le long d'une génératrice de contact sur ces zones localisées.

Cette concentration de contraintes à la surface et dans la matière à proximité immédiate des alésages est préjudiciable à la qualité du montage mécanique et à la résistance mécanique de l'ensemble, et notamment à sa résistance en fatigue et à sa résistance statique à la traction. Les efforts ne sont pas retransmis suivant les directions recherchées, chacune des parties constitutives de la pièce ne travaille pas de façon optimale en réponse aux sollicitations et toute la matière n'est pas sollicitée.

Cette concentration de contraintes localisée peut rapidement conduire à des amorces de criques et donc, à terme, à la rupture.

Du fait des règles de sécurité très exigeantes que l'on peut rencontrer dans les ouvrages d'art, les bâtiments, les engins mobiles ou dans le domaine aéronautique, de tels éléments, intégrés dans la structure, sont des pièces vitales étroitement surveillées.

Dans le cas d'une détection de telles dégradations, l'élément est changé, ce qui occasionne pour le moins des frais élevés de maintenance mais dans le cas d'une surveillance approximative, le risque de rupture n'est pas exclu.

Aussi, la présente invention a pour but de pallier ce problème d'amorce de criques par concentration de contraintes dans une pièce soumise à des sollicitations répétées en traction / compression dans un montage avec une chape et une goupille, notamment à limiter les concentrations de contraintes sur la surface intérieure des alésages et les arêtes.

La présente invention est maintenant décrite en application à des bielles de structure d'un aéronef, sans que cet exemple soit, d'une quelconque manière, limitatif.

Le mode préféré de réalisation est illustratif et des dessins sont annexés pour expliciter cette description, les figures de ces dessins représentant :
- Figure 1 : une vue en perspective d'une extrémité d'une bielle aéronautique avec un embout rapporté, à montage par goupille,
- Figure 2 : une vue en élévation latérale de la bielle de la figure 1, avec une représentation schématique des contraintes et conséquences,
- Figure 3 : une vue d'un mode de mise en oeuvre du procédé et de l'embout rapporté obtenu.

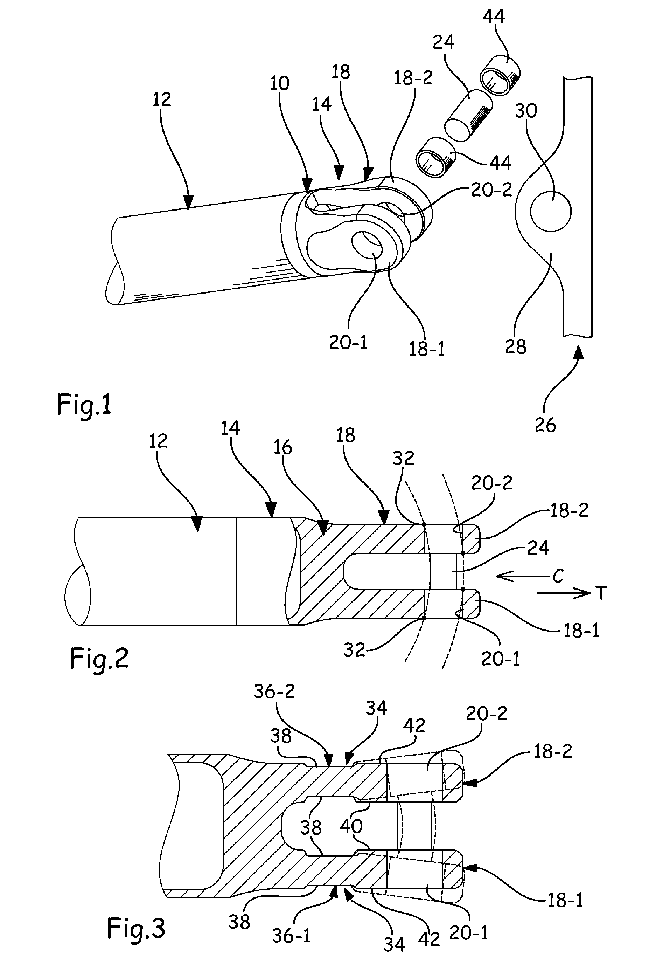

Sur la figure 1, on a représenté partiellement un corps tubulaire, en l'occurrence une bielle 10 aéronautique constituée d'un corps 12 de bielle et de deux embouts 14 rapportés aux extrémités dudit corps 12.

La bielle 10 est réalisée en matériaux légers et très résistants, et de préférence en matériaux composites, notamment à partir de fibres de carbone à haut module et de résine époxy, avec un procédé de fabrication par pultrusion permettant d'obtenir un corps de bielle de grande précision et avec des caractéristiques mécaniques élevées.

L'embout 14 est, dans ce mode de réalisation, en matériau métallique du type alliage léger comme l'aluminium. Cet embout 14 comprend un corps 16 d'embout de forme conjuguée de celle de l'extrémité du corps 12 de bielle, en l'occurrence de section circulaire.

A l'extrémité opposée, l'embout 14 rapporté comporte une chape 18 avec deux ailes 18-1, 18-2 munies chacune d'un alésage 20-1, 20-2 destiné à recevoir une goupille 24 ainsi que cela sera expliqué ultérieurement.

Par goupille, l'invention entend un axe, un boulon ou tout autre pièce similaire. L'extrémité libre du corps 12 de bielle reçoit l'embout 14 par emboîtement et collage, cette liaison ne faisant pas partie de la présente invention.

La bielle est ainsi conçue pour être reliée à une structure 26 munie d'une oreille 28 portant un alésage 30 destiné à recevoir également la même goupille 24 ci-avant mentionnée. Ladite oreille 28 vient se loger entre les deux ailes 18-1, 18-2 de la chape 18.

Sur la figure 2, on constate que lorsque la bielle 10 est soumise à des efforts de traction T et des efforts de compression C, il se produit une concentration de contraintes à partir de la surface intérieure de l'alésage pour le moins, ce qui peut conduire à une apparition de criques ou du moins une apparition d'amorces de criques.

La goupille 24 se courbe sous les efforts et vient en appui sur des zones 32 de portée limitée dans les alésages 20-1, 20-2, zones 32 qui reprennent l'intégralité des efforts exercés, ce qui provoque les phénomènes de concentration de contraintes. Ceci est d'autant plus critique que le jeu est grand dans l'alésage et que la goupille est relativement flexible.

Cette répartition non homogène provoque donc des pics de concentration de contraintes, préjudiciables à la durée de vie en fatigue, la matière autour de la zone la plus sollicitée étant alors moins contrainte et sous employée.

Sur l'oreille 28 de la structure 26, l'alésage 30 subit de façon beaucoup plus limitée ces phénomènes de concentration de contraintes car il est situé dans la zone médiane de la goupille 24, au point bas ou haut de la déformée qui, lors de la microflexion de la goupille, est la moins déformée.

Sur la figure 2, on a représenté en trait discontinu, de façon accentuée pour la clarté du dessin, les déformations de la goupille 24 sous les effets des efforts de traction.

Afin de résoudre le problème de concentration de contraintes et de la génération des criques sur ces points de concentration, le procédé selon la présente invention prévoit de réaliser au moins une zone 34 de moindre rigidité dans l'embout 14 en amont desdits alésages 20-1, 20-2.

Plus précisément, une zone 34 de moindre rigidité est réalisée dans au moins une aile 18-1, 18-2 de la chape 18.

Cette zone 34 de moindre rigidité se situe sensiblement en pied de chape 18. Cette zone 34 de moindre rigidité permet à une aile 18-1, 18-2 de fléchir et de se courber vers l'extérieur.

Selon l'invention, la déformation d'une aile 18-1, 18-2 est parfaitement programmée et maîtrisée par la conception de la zone 34 de moindre rigidité.

Aussi, grâce à une conception appropriée de la zone 34 de moindre rigidité, les alésages 20-1, 20-2 s'orientent angulairement sous l'effet de la flexion des ailes 18-1, 18-2, et l'axe longitudinal de chaque alésage 20-1, 20-2 s'oriente de façon très proche de l'orientation de l'axe de la goupille 24 qui les traverse.

Grâce à la déformation programmée des ailes 18-1, 18-2, la répartition des contraintes sera plus homogène entre la goupille 24 et les alésages 20-1, 20-2 le long de la génératrice de contact, et dans la matière autour des alésages 20-1, 20-2, car la surface de la portée est fortement améliorée.

Selon l'invention, une zone 34 de moindre rigidité est constituée par au moins une réduction d'épaisseur 36-1, 36-2 d'une aile 18-1, 18-2 de la chape 18.

Dans un mode de réalisation préféré et illustré par la figure 3, on réalise au moins une réduction d'épaisseur 36-1, 36-2 de chaque aile 18-1, 18-2 de la chape 18.

Chaque réduction d'épaisseur 36-1, 36-2 est réalisée entre l'alésage 20-1, 20-2 de chaque aile 18-1, 18-2 de la chape 18 et le corps 16 d'embout.

Toujours dans un mode de réalisation préféré, les réductions d'épaisseur 36-1, 36-2 sont identiques sur chacune des ailes 18-1, 18-2 afin d'assurer une réponse mécanique identique de chacune de ces deux ailes.

Toutefois, dans une structure d'aéronef prise pour exemple, les déformations liées aux efforts de compression et de traction sont aussi associées à des phénomènes de flambage, si bien que les déformations de la goupille 24 sous ces déformations combinées ne sont donc pas nécessairement symétriques sur chacune des ailes 18-1, 18-2, et chacune d'elles doit donc pouvoir répondre proportionnellement à la déformation de façon à limiter la concentration de contraintes en conservant le meilleur alignement possible de l'axe de chaque alésage 20-1, 20-2 avec celui de la goupille 24.

Par conséquent, l'invention couvre aussi d'autres modes de réalisation, non représentés sur les figures, permettant d'assurer une réponse différente de chacune des deux ailes 18-1, 18-2 à des efforts de traction, de compression et de flexion spécifiques à chacune d'elles.

Dans ces autres modes de réalisation, une réduction d'épaisseur 36-1, 36-2 est réalisée sur une seule aile 18-1, 18-2 de la chape 18, ou les réductions d'épaisseur 36-1, 36-2 réalisées sur chacune des ailes 18-1, 18-2 ne sont pas identiques.

Ensuite, comme illustré en figure 3, chaque réduction d'épaisseur 36-1, 36-2 prend la forme d'au moins un dégagement de matière 38 réalisé dans la face intérieure 40 et/ou extérieure 42 de l'aile 18-1, 18-2 qui la reçoit.

Dans un mode de réalisation préféré et afin de permettre à une aile 18-1, 18-2 de fléchir et de se courber vers l'extérieur, chaque réduction d'épaisseur 36-1, 36-2 n'est pas réalisée symétriquement sur les faces intérieure 40 et extérieure 42 de l'aile 18-1, 18-2 qui la reçoit.

A cet effet, chaque réduction d'épaisseur 36-1, 36-2 comprend uniquement un dégagement de matière 38 sur la face intérieure 40 de l'aile 18-1, 18-2 qui la reçoit, ou un dégagement de matière 38 plus important sur la face intérieure 40 de l'aile 18-1, 18-2 qui la reçoit que le dégagement de matière 38 sur la face extérieure 42 de cette aile.

Toutefois, l'invention couvre aussi un autre mode de réalisation permettant par exemple de répondre aux microflexions engendrées par les efforts de traction et/ou de compression sur chacune des deux ailes elle-même si les efforts sont sensiblement identiques en traction et en compression, et dans lequel chaque réduction d'épaisseur 36-1, 36-2 est réalisée symétriquement sur chaque face intérieure 40 et extérieure 42 d'une aile 18-1, 18-2.

Dans cet autre mode de réalisation, chaque réduction d'épaisseur 36-1, 36-2 comprend un dégagement de matière 38 identique sur chaque face intérieure 40 et extérieure 42 de l'aile 18-1, 18-2 qui la reçoit.

De manière générale dans la présente invention, du fait de la présence d'une zone 34 de moindre rigidité, chaque aile 18-1, 18-2 peut se déformer sous la sollicitation de la goupille lors des alternances traction / compression et accompagner ces déformations.

On obtient ainsi un contact amélioré le long de la génératrice de contact entre les alésages 20-1, 20-2 et la goupille 24 sous flexion, si bien que les efforts sont transmis de façon plus répartie sur la surface interne des alésages 20-1, 20-2. La déformation autorisée de chaque aile 18-1, 18-2 est calculée pour correspondre avec la déformée de la goupille 24, ceci sur toute la plage des efforts de traction et de compression envisagée pour la bielle 10 portant cet embout 14.

Il est à remarquer que les matériaux constituant la chape 18 et la goupille 24 peuvent être et sont souvent différents.

La courbe de déformation sous efforts de la goupille 24 est donc différente de celle de la chape 18, il faut donc en tenir compte pour trouver un compromis des déformées afin notamment que lors des efforts maximum, la surface de contact soit la plus importante.

On note aussi que lorsque de tels embouts 14 sont réalisés, il peut être prévu des bagues intermédiaires 44 disposées dans les alésages 20-1, 20-2 qui reçoivent la goupille 24. Ces bagues 44 sont interposées entre les parois internes des alésages 20-1, 20-2 et la goupille 24, et immobilisées dans l'alésage par frettage par exemple.

Le procédé selon la présente invention trouve alors application exactement de la même façon.

Dans les études de calcul, il est entendu que la résistance dans la zone de moindre rigidité est supérieure aux efforts auxquels la bielle 10 est soumise, le but étant de créer une zone de déformation et non pas de fragiliser la liaison. L'invention couvre aussi l'embout 14 obtenu par la mise en oeuvre du procédé.

La présente invention trouve donc un intérêt majeur dans cette application aéronautique particulière qui présente de nombreuses contraintes spécifiques, mais le procédé peut s'appliquer à tout domaine où des tirants avec embouts rapportés ou venus de fabrication sont fortement sollicités.

De tels embouts à chape montés avec une goupille peuvent trouver application dans des biellettes de trains roulants de véhicules visant des performances élevées ou des attelages cadène/ridoir dans les gréements de structures navigantes ou toutes pièces de structures portantes, bâtis ou charpentes.

## Revendications

1. Procédé de réalisation d'un embout (14) rapporté sur un corps (12) sous forme d'une pièce longitudinale telle qu'un tube, ledit embout comprenant une chape (18) avec deux ailes (18-1, 18-2) munies chacune d'un alésage (20-1, 20-2) destiné à coopérer avec une goupille (24), **caractérisé en ce que** l'on réalise au moins une zone (34) de moindre rigidité dans ledit embout (14) en amont desdits alésages.

2. Procédé de réalisation d'un embout (14) rapporté sur un corps (12) selon la revendication 1, **caractérisé en ce qu'**une zone (34) de moindre rigidité est réalisée sur au moins une aile (18-1, 18-2) de la chape (18).

3. Procédé de réalisation d'un embout (14) rapporté sur un corps (12) selon la revendication 2, **caractérisé en ce qu'**une zone (34) de moindre rigidité identique est réalisée sur chaque aile (18-1, 18-2).

4. Procédé de réalisation d'un embout (14) rapporté sur un corps (12) selon la revendication 2 ou 3, **caractérisé en ce qu'**une zone (34) de moindre rigidité n'est pas réalisée symétriquement sur les faces intérieure (40) et extérieure (42) de l'aile (18-1, 18-2) qui la reçoit.

5. Procédé de réalisation d'un embout (14) rapporté sur un corps (12) selon l'une des revendications 1 à 4, **caractérisé en ce qu'**une zone (34) de moindre rigidité est constituée par au moins une réduction d'épaisseur (36-1,36-2) d'une aile (18-1, 18-2) de la chape (18).

6. Procédé de réalisation d'un embout (14) rapporté sur un corps (12) selon la revendication 5, **caractérisé en ce que** chaque réduction d'épaisseur (36-1, 36-2) prend la forme d'au moins un dégagement de matière (38) réalisé dans la face intérieure (40) et/ou extérieure (42) de l'aile (18-1, 18-2) qui la reçoit.

7. Procédé de réalisation d'un embout (14) rapporté sur un corps (12) selon la revendication 6, **caractérisé en ce que** chaque réduction d'épaisseur (36-1, 36-2) comprend uniquement un dégagement de matière (38) sur la face intérieure (40) de l'aile (18-1, 18-2) qui la reçoit, ou un dégagement de matière (38) plus important sur la face intérieure (40) de l'aile (18-1, 18-2) qui la reçoit que le dégagement de matière (38) sur la face extérieure (42) de cette aile.

8. Bielle aéronautique comprenant un corps (12) et au moins un embout (14) selon l'une quelconque des revendications précédentes.
